# EUROPEAN PATENT SPECIFICATION

(11) **EP 2 593 698 B1**
(45) Date of publication and mention of the grant of the patent: **17.09.2014**
(21) Application number: 11743580.0
(22) Date of filing: 11.07.2011
(51) Int. Cl.: F16K 11/07, F16K 31/122, E05F 15/00, F15B 20/00

(54) **ADJUSTABLE PILOT-ACTUATED VALVE AND HYDRAULIC SYSTEM COMPRISING SUCH A VALVE**
EINSTELLBARES PILOTBETÄTIGTES VENTIL UND HYDRAULISCHES SYSTEM MIT EINEM SOLCHEN VENTIL
SOUPAPE RÉGLABLE À ACTIONNEMENT PAR PILOTE ET SYSTÈME HYDRAULIQUE COMPRENANT CETTE SOUPAPE

(30) Priority: 12.07.2010 GB 201011656
(43) Date of publication of application: 22.05.2013
(60) Divisional application: 13176213.0
(73) Proprietor: Norgren Limited, Lichfield Staffordshire WS13 6SB (GB)
(72) Inventor: BROOKS, Jonathan, Staffordshire DE15 9JT (GB); KIRBY, Andy, Derbyshire DE11 0HD (GB)
(74) Representative: Hartwell, Ian Peter
(86) International application number: PCT/GB2011/051287
(87) International publication number: WO 2012/007739

(56) References cited:
- DE-A1- 1 708 446
- DE-A1- 2 926 218
- DE-A1- 3 310 525
- DE-B- 1 052 762
- JP-A- 9 264 302
- US-A- 4 523 513
- US-A1- 2004 187 940

## Description

### TECHNICAL FIELD

The present invention relates to, pilot-actuated valves, and more particularly, to a pilot-actuated valve with an adjustable biasing force and to a fluid operated actuator system comprising an adjustable pilot actuated valve.

### BACKGROUND OF THE INVENTION

Fluid operated doors are implemented in a wide variety of applications such as trains, buses, office buildings, etc. Fluid operated doors are often operated pneumatically, although other fluids, such as hydraulic fluid can be used. A user or operator can therefore, actuate a control valve, which supplies fluid pressure, such as pneumatic or hydraulic pressure to a fluid operated actuator, which is attached to the door. In response to the fluid pressure signal, a piston rod retracts into the fluid operated actuator to open the door. In order to close the door, the user can switch the control valve to supply pressurized fluid to the opposite side of the fluid operated actuator to extend the piston rod, thereby closing the door.

A general requirement of fluid actuated doors is the presence of a safety feature to automatically remove the pressurized fluid from the fluid operated actuator and allow the door to open in the event that a person or other object is trapped in the closing door. This safety feature is designed to prevent injury and damage to the door and/or the item being trapped.

One prior art attempt is to implement a pilot actuated valve. One example is a pilot actuated valve that receives a pilot pressure from each side of the fluid operated actuator in order to actuate the valve. Therefore, the valve actuates according to a differential pressure experienced in the fluid operated actuator, which is then applied as a pilot pressure to the safety valve. A problem with this approach is that small fluctuations in the differential pressure are common and vary based on the particular door. For example, friction created as the door opens and closes typically causes a differential pressure, which as can be appreciated, will vary from door to door. Therefore, prior art attempts of creating a differential pressure actuated pilot valve have failed and cannot be incorporated in a wide variety of doors. Rather, a specific valve must be created for each application, which as can be appreciated is costly and time consuming.

For example, FIG. 1 shows a prior art safety valve 10 in the form of a pilot-actuated valve disclosed by U.S. Patent No. 4,523,513 issued June 18, 1985 to Gudat et al. The prior art safety valve 10 comprises a housing 11 forming a chamber 12. A spool 13 is movable within the chamber 12. The prior art safety valve 10 comprises a 3/2 valve with three ports 14a-c. Movement of the spool 13 can determine whether the first port 14a is in fluid communication with a second port 14b or a third port 14c. The prior art safety valve 10 further includes two pistons 15a, 15b, which are coupled to the spool 13 and movable within pilot chambers 16a, 16b. The pistons 15a, 15b are acted upon by a pilot pressure received from pilot ports 17a, 17b. For example, the pilot ports 17a, 17b may be in fluid communication with a fluid operated actuator (not shown), for example. As shown, the first piston 15a comprises a first diameter D₁ while the second piston 15b comprises a second diameter D₂, which is greater than D₁. As can be appreciated, the larger piston 15b is provided so that if the pressure in chambers 16a, 16b are within a threshold difference, the spool 13 is biased to a first position. The first position may be referred to as a default condition and the safety valve 10 remains in the default condition unless something or someone is blocking the door from closing. Consequently, in order to move the spool 13 to a second position (safety position), a pressure differential in the fluid operated actuator and thus, experienced between the two pilot ports 17a, 17b, must exceed a threshold difference. Namely, the force acting on the first piston 15a by the pilot pressure received by the first pilot chamber 16a is required to exceed the force acting on the second piston 15b by the pressure received by second pilot chamber 16b. As a result, the larger piston 15b prevents the safety valve 10 from actuating to the safety position until the differential pressure exceeds a threshold difference. Therefore, the safety valve 10 will not actuate from small pressure differentials that are experienced during normal use when there is not an object blocking the door.

One problem with the prior art safety valve 10 is that the pressure differential required to actuate the valve is predetermined based on the preselected sizes of the first and second pistons 15a, 15b and cannot be adjusted. Consequently, the safety valve 10 may actuate undesirably when no object is blocking the door if the door experiences a higher level of friction than anticipated, resulting in a higher than expected differential pressure during normal operation. Alternatively, if the door experiences a lower level of friction than the valve is originally designed for, the valve may not actuate until an unreasonable or undesirable amount of force is applied to the object or person blocking the door as the door attempts to close. This can result in damage to the door or injury to the person, for example. Thus, using the prior art safety valve 10 may result in an unreasonable compromise between false alarms and safety.

Therefore, there exists a need in the art for a pilot-actuated valve with an adjustable biasing force such that the required pressure differential to actuate the valve can be adjusted to suit the particular implementation. Further, there exists a need for a fluid operated actuator system that can cease actuation of the actuator if a differential pressure in the actuator exceeds a threshold level, whereby the threshold level is adjustable. The present invention overcomes these and other problems and an advance in the art is achieved.

Other prior art systems are disclosed in the documents DE-2926218-A1, DE-1708446-A1 and DE-3310525-A1.

### SUMMARY OF THE INVENTION

An adjustable pilot-actuated valve is provided. The adjustable pilot-actuated valve comprises a housing forming a valve chamber, a first piston chamber, and a second piston chamber. Preferably, a valve spool is provided that is movable within the valve chamber. The adjustable pilot-actuated valve further comprises a first piston movable within the first piston chamber and including a first side and a second side with the second side coupled to the valve spool and a second piston movable within the second piston chamber and including a first side and a second side with the second side coupled to the valve spool. A first pilot port is formed in the housing to receive a first pilot pressure and is in fluid communication with the first side of the first piston. A second pilot port is also formed in the housing to receive a second pilot pressure and is in fluid communication with the first side of the second piston. Preferably, the adjustable pilot-actuatec valve further includes a bias port formed in the housing to receive a bias pressure and is in fluid communication with the second side of the first piston.

An adjustable pilot-actuated valve is provided.

The adjustable pilot-actuated valve comprises a housing forming a valve chamber, a first piston chamber, and a second piston chamber. A valve spool is movable within the valve chamber. The adjustable pilot-actuated valve further comprises a first piston movable within the first piston chamber and including a first side and a second side with the second side coupled to the valve spool and a second piston movable within the second piston chamber and including a first side and a second side with the second side coupled to the valve spool. A first pilot port is formed in the housing to receive a first pilot pressure and is in fluid communication with the first side of the first piston. A second pilot port is formed in the housing to receive a second pilot pressure and is in fluid communication with the first side of the second piston. Preferably, the adjustable pilot-actuated valve further comprises a biasing spring acting on the first side of the second piston and providing a biasing force on the valve spool in a first direction and an adjustment member movable relative to the housing and contacting the biasing spring to adjust the biasing force of the biasing spring.

A fluid operated actuator system is provided according to the invention. The system includes a fluid operated actuator including a housing, a piston movable within the housing and separating the housing into a first fluid chamber and a second fluid chamber. According to the invention, the system further comprises a control valve including a first port in fluid communication with a pressurized fluid source and movable between a first position and a second position to selectively open a fluid communication path between the first port and a second port and the first port and a third port. According to the invention, the system further includes a balance valve in fluid communication with the first and second fluid chambers and movable between a first position and a second position. The balance valve comprises a first port in fluid communication with the second port of the control valve, a second port in fluid communication with the third port of the control valve, and a pilot port to receive a pilot pressure. If the pilot pressure is less than a threshold pressure, the balance valve actuates to the first position to provide fluid communication between the control valve and the fluid operated actuator, and if the pilot pressure reaches a threshold pressure, the balance valve actuates to the second position to provide fluid communication between the first and second fluid chambers. According to the invention, the system further comprises an adjustable pilot-actuated valve movable between a first position and a second position. The adjustable pilot-actuated valve comprises a first port in fluid communication with the pilot port of the balance valve, a second port comprising an exhaust, a third port in fluid communication with the pressurized fluid supply, a first pilot port in fluid communication with the first fluid chamber, and a second pilot port in fluid communication with the second fluid chamber. According to the invention, the adjustable pilot-actuated valve actuates to the first position to exhaust pressurized fluid acting on the pilot port of the balance valve if a pressure differential between the first fluid chamber and the second fluid chamber is less than a threshold difference; and the adjustable pilot-actuated valve actuates to a second position to supply at least the threshold pilot pressure to the pilot port to actuate the balance valve to the second position if the pressure differential between the first fluid chamber and the second fluid chamber reaches the threshold difference.

### ASPECTS

Preferably, an adjustable pilot-actuated valve comprises:
a housing forming a valve chamber, a first piston chamber, and a second piston chamber;
a valve spool movable within the valve chamber;
a first piston movable within the first piston chamber and including a first side and a second side with the second side coupled to the valve spool;
a second piston movable within the second piston chamber and including a first side and a second side with the second side coupled to the valve spool;
a first pilot port formed in the housing to receive a first pilot pressure and in fluid communication with the first side of the first piston;
a second pilot port formed in the housing to receive a second pilot pressure and in fluid communication with the first side of the first piston; and
a bias port formed in the housing to receive a bias pressure and in fluid communication with the second side of the first piston.

Preferably, the adjustable pilot-actuated valve further comprises a first sealing member coupled to the first piston proximate the first side and a second sealing member coupled to the first piston proximate the second side.

Preferably, the adjustable pilot-actuated valve further comprises a first port, a second port, and a third port;
wherein the ports are configured such that the first and second ports are in fluid communication if a differential pressure between the first pilot pressure received by the first pilot port and the second pilot pressure received by the second pilot port is less than a threshold difference; and
wherein the first and third ports are in fluid communication if the differential pressure between the first and second pilot pressures reaches the threshold difference.

Preferably, the threshold difference is based on the bias pressure received by the bias port.

Preferably, an adjustable pilot-actuated valve comprises:
a housing forming a valve chamber, a first piston chamber, and a second piston chamber;
a valve spool movable within the valve chamber;
a first piston movable within the first piston chamber and including a first side and a second side with the second side coupled to the valve spool;
a second piston movable within the second piston chamber and including a first side and a second side with the second side coupled to the valve spool;
a first pilot port formed in the housing to receive a first pilot pressure and in fluid communication with the first side of the first piston;
a second pilot port formed in the housing to receive a second pilot pressure and in fluid communication with the first side of the first piston;
a biasing spring acting on the first side of the second piston and providing a biasing force on the valve spool in a first direction; and
an adjustment member movable relative to the housing and contacting the biasing spring to adjust the biasing force of the biasing spring.

Preferably, the adjustable pilot-actuated valve further comprises a first port, a second port, and a third port,
wherein the ports are configured such that the first and second ports are in fluid communication if a differential pressure between the first pilot pressure received by the first pilot port and the second pilot pressure received by the second pilot port is less than a threshold difference; and
wherein the first and third ports are in fluid communication if the differential pressure between the first and second pilot pressures reaches the threshold difference.

Preferably, the threshold difference is based on the biasing force provided by the biasing member.

According to the invention, a fluid operated actuator system comprises:
a fluid operated actuator including a housing, a piston movable within the housing and separating the housing into a first fluid chamber and a second fluid chamber;
a control valve including a first port in fluid communication with a pressurized fluid source and movable between a first position and a second position to selectively open a fluid communication path between the first port and a second port or the first port and a third port;
a balance valve in fluid communication with the first and second fluid chambers and movable between a first position and a second position including:
   a first port in fluid communication with the second port of the control valve;
   a second port in fluid communication with the third port of the control valve;
   a pilot port to receive a pilot pressure;
   wherein if the pilot pressure is less than a threshold pressure, the balance valve actuates to the first position to provide fluid communication between the control valve and the fluid operated actuator;
   wherein if the pilot pressure reaches a threshold pressure, the balance valve actuates to the second position to provide fluid communication between the first and second fluid chambers;
an adjustable pilot-actuated valve movable between a first position and a second position including:
   a first port in fluid communication with the pilot port of the balance valve;
   a second port comprising an exhaust;
   a third port in fluid communication with the pressurized fluid supply;
   a first pilot port in fluid communication with the first fluid chamber;
   a second pilot port in fluid communication with the second fluid chamber;
   wherein the adjustable pilot-actuated valve actuates to the first position to exhaust pressurized fluid acting on the pilot port of the balance valve if a pressure differential between the first fluid chamber and the second fluid chamber is less than a threshold difference; and
   wherein the adjustable pilot-actuated valve actuates to a second position to supply at least the threshold pilot pressure to the pilot port to actuate the balance valve to the second position if the pressure differential between the first fluid chamber and the second fluid chamber reaches the threshold difference.

Preferably, the adjustable pilot actuated valve further comprises a bias port in fluid communication with a bias pressure.

Preferably, the fluid operated actuator system further comprises a pressure regulator in fluid communication with the bias port and the pressurized fluid supply and adapted to receive pressurized fluid from the pressurized fluid supply and output the bias pressure to the bias port.

Preferably, the threshold difference is based on the bias pressure received by the bias port.

Preferably, the adjustable pilot-actuated valve further comprises:
a biasing spring providing a biasing force to actuate the adjustable pilot-actuated valve towards the first position; and
an adjustment member contacting the biasing spring to adjust the biasing force of the biasing spring.

Preferably, the threshold difference is based on the biasing force provided by the biasing spring.

### BRIEF DESCRIPTION OF THE DRAWINGS

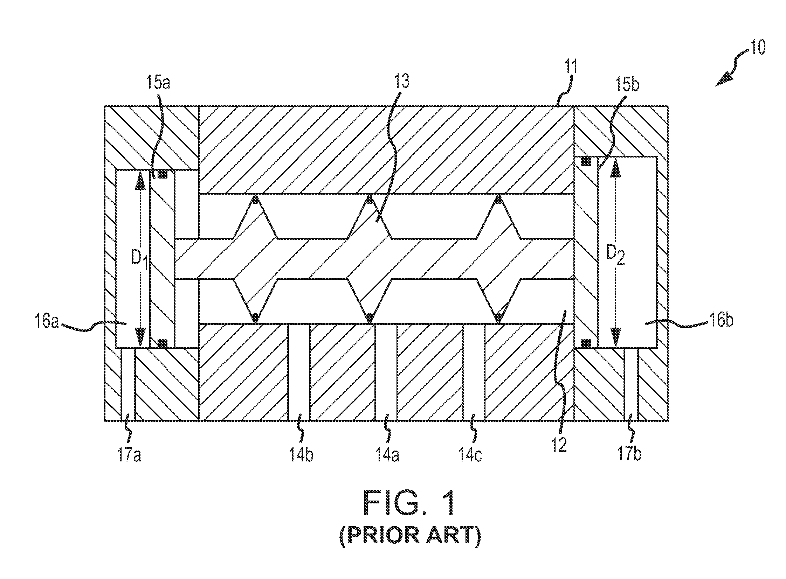

FIG. 1 shows a cross-sectional view of a prior art pilot actuated valve.
FIG. 2 shows a schematic for a fluid operated actuator system according to the invention.
FIG. 3 shows a cross-sectional view of a pilot actuated valve.
FIG. 4 shows a cross-sectional view of another pilot actuated valve.

### DETAILED DESCRIPTION OF THE INVENTION

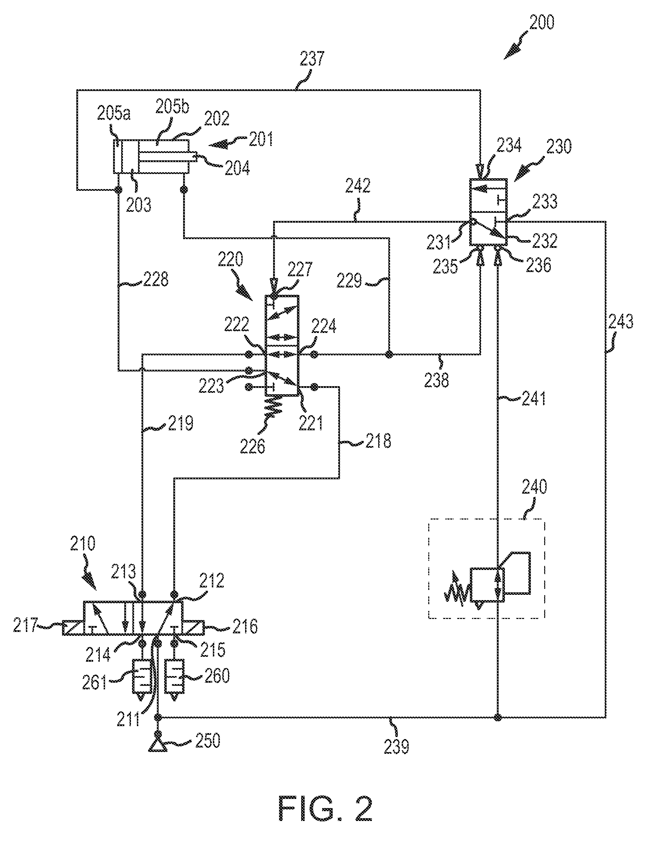

FIGS. 2 - 4 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims.

**FIG.** 2 shows a schematic of a fluid operated actuator system 200 according to an embodiment of the invention. The fluid operated actuator system 200 can be implemented to open and/or close a fluid actuated door (not shown), such as found on railway carriage doors, passenger bus doors, etc. In other embodiments, the system 200 may be used to actuate a fluid operated actuator that requires a safety feature to reverse directions of the actuator if the differential pressure on either side of the piston exceeds a threshold pressure. Therefore, the present invention should not be limited to the actuation of doors.

According to the invention, the fluid operated actuator system 200 comprises a fluid operated actuator 201 including a housing 202, a piston 203 movable within the housing 202, and a piston rod 204 coupled to the piston 203. The piston rod 204 or the housing 202 may further be coupled to a door (not shown), which is to be actuated. Therefore, movement of the piston rod 204 relative to the housing 202 causes the door to open and close. As shown, the piston 203 separates the housing 202 into a first fluid chamber 205a and a second fluid chamber 205b as is generally known in the art. Actuation of the fluid operated actuator 201 is accomplished using a control valve 210, a balance valve 220, a pressure biased pilot valve 230, and a fluid regulator 240.

According to an embodiment of the invention, the control valve 210 comprises a 5/2 double solenoid actuated valve; however, it should be appreciated that the control valve 210 may comprise other configurations. According to the invention, the control valve 210 is adapted to receive a pressurized fluid from a pressurized fluid source 250. The pressurized fluid source 250 may supply pneumatic or hydraulic pressure, for example. According to the invention, a first port 211 is in fluid communication with the pressurized fluid source 250.

When the control valve 210 is actuated tc a first position by actuating a first solenoid 216, the first port 211 is brought into fluid communication with a second port 212 while a third port 213 is brought into fluid communication with an exhaust port 214. Conversely, when the control valve 210 is actuated to a second position by actuating the second solenoid 217, the first port 211 is brought into fluid communication with the third port 213 while the second port 212 is brought into fluid communication with a second exhaust port 215.

The control valve 210 is in fluid communication with the balance valve 220 via fluid lines 218, 219. The first fluid line 218 is coupled to the second port 212 of the control valve 210 and to a first port 221 of the balance valve 220. Therefore, the first fluid line 218 provides fluid communication between the second port 212 of the control valve 210 and the first port 221 of the balance valve 220. The second fluid line 219 is coupled to the third port 213 of the control valve 210 and a second fluid port 222 of the balance valve 220. Therefore, the second fluid line 219 provides fluid communication between the third port 213 of the control valve 210 and the second port 222 of the balance valve 220.

According to the embodiment shown, the balance valve 220 comprises a 5/2 pressure actuated, spring biased valve. The spring 226 biases the balance valve 220 to a first position, *i.e.,* a default position. In the default position, the first fluid port 221 is in fluid communication with a third port 223 while the second fluid port 222 is in fluid communication with a fourth fluid port 224. Conversely, when the balance valve 220 is actuated to a second position when a pilot pressure received at a pilot port 227 exceeds a threshold pressure, which is described in more detail below, the first and second fluid ports 221, 222 are closed off while the third and fourth fluid ports 223, 224 are brought into fluid communication with one another. The third port 223 of the balance valve 220 is in fluid communication with the first chamber 205a of the fluid operated actuator 201 via a fluid line 228. Similarly, the fourth fluid port 224 of the balance valve 220 is shown in fluid communication with the second chamber 205b of the fluid operated actuator 201 via a fluid line 229.

Therefore, when the balance valve 220 is in the first position, the pressurized fluid is supplied to the fluid operated actuator 201 via the fluid line 228 or the fluid line 229. The specific chamber of the fluid operated actuator 201 supplied with pressurized fluid will depend upon the actuation position of the control valve 210. Conversely, when the balance valve 220 is actuated to the second position, the pressurized fluid from the pressurized fluid source 250 is closed off from the fluid operated actuator 201 regardless of the actuation position of the control valve 220 and the first and second fluid chambers 205a, 205b are brought into fluid communication with one another.

According to the FIG. 2, branching off from the fluid line 228, which couples the third port 223 of the balance valve 220 with the first fluid chamber 203 of the fluid operated actuator 201, is a fluid line 237 providing a fluid communication path between the fluid line 228 and a first pilot port 234 of the adjustable valve 230. Therefore, a pilot pressure in fluid line 237 that acts upon the first pilot port 234 of the adjustable valve 230 is substantially equal to the pressure in the first fluid chamber 205a of the fluid operated actuator 201. The adjustable valve 230 comprises a pilot-actuated safety valve. However, the adjustable valve 230 may be used for other implementations where a variable differential pilot pressure is desired to actuate the valve.

Also shown in FIG. 2 is a fluid line 238 that branches off from the fluid line 229, which provides fluid communication between the fourth fluid port 224 of the balance valve 220 and the second fluid chamber 205b of the fluid operated actuator 201. The fluid line 238 provides a fluid communication path between the fluid line 229 and a second pilot port 235 of the adjustable valve 230. Therefore, a pilot pressure in the fluid line 238 is substantially equal to the pressure in the second fluid chamber 205b of the fluid operated actuator 201.

Preferably, the adjustable valve 230 also comprises a pressure bias port 236. Pressure supplied to the pressure bias port 236 acts in combination with pressure supplied to the second pilot port 235. Preferably, a fluid line 239 provides a fluid communication path between the pressurized fluid supply 250 and the pressure regulator 240. The pressure regulator 240 can reduce the pressure in the fluid line 239 from the pressure of the pressurized fluid supply 250 to a desired pressure, as is generally known in the art. Pressure regulators are widely known and the particular pressure regulator used for the pressure regulator 240 is not important for the purpose of the present invention. The pressure regulator 240 outputs the pressurized fluid at a desired pressure into a fluid line 241, which provides fluid communication between the pressure regulator 240 and the bias port 236. It should be appreciated that in other embodiments, the pressure regulator 240 may be omitted if the pressure of the pressurized fluid supply 250 is provided at the desired pressure.

According to the invention, the adjustable valve 230 comprises a first port 231 in fluid communication with the pilot port 227 of the balance valve 220 via a fluid line 242. The adjustable valve 230 further comprises an exhaust port 232 and a third fluid port 233. According to the invention, the third fluid port 233 is in fluid communication with the pressurized fluid supply 250 via a fluid line 243, which is coupled to the fluid line 239.

As can be seen from FIG. 2, when the adjustable valve 230 is in a first position, *i.e.,* its default position, the first fluid port 231 is in fluid communication with the exhaust port 232. With the first fluid port 231 in fluid communication with the pilot port 227 of the balance valve 220 via the fluid line 242, there is substantially no pressure acting on the pilot port 227 when the pilot valve 230 is in its default position. Conversely, when the pilot valve 230 is actuated to a second position, the first and third fluid ports 231, 233 are selectively brought into fluid communication with one another. As a result, the pressurized fluid supply 250 is brought into fluid communication with the pilot port 227 of the balance valve 220 to actuate the balance valve 220 to the second position.

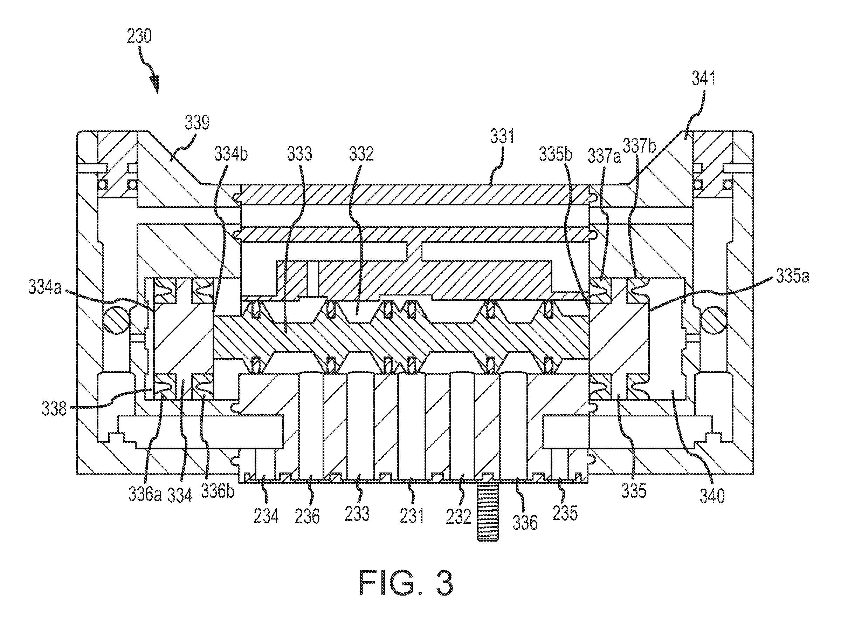

**FIG. 3** shows the adjustable valve 230 Preferably, then adjustable valve 230 comprises a housing 331 forming a valve chamber 332. The adjustable valve 230 can further include a spool 333 that is movable within the valve chamber 332. Preferably, the spool 333 is provided to selectively provide a fluid communication path between the first fluid port 231 and the second fluid port 232 or the first fluid port 231 and the third fluid port 233.

Preferably, the adjustable valve 230 further comprises a first piston 334 and a second piston 335. Preferably, the first piston 334 comprises a first side 334a and a second side 334b. The second side 334b is coupled to the spool 333. Similarly, the second piston 335 comprises a first side 335a and a second side 335b. The second side 335b is coupled to the spool 333. Preferably, the first and second pistons 334, 335 comprise "double pistons" in that the pistons are capable of being acted upon by pressurized fluid on both sides. Therefore, the first piston 334 is provided with first and second sealing members 336a, 336b with the first sealing member 336a proximate the first side 334 and the second sealing member 336b proximate the second sealing side 334b. Similarly, the second piston 335 is provided with first and second sealing members 337a, 337b with the first sealing member 337a proximate the first side 335a and the second sealing member 337b proximate the second side 335b. The sealing members may comprise O-rings, k-ring seals, etc. The particular type of sealing member used should in no way limit the scope of the present invention.

Preferably, the first piston 334 is movable within a first piston chamber 338 formed in a first end cap 339. Similarly, the second piston 335 is movable within a second piston chamber 340 formed in a second end cap 341. While the end caps 339, 341 are shown as comprising separate components, it should be appreciated that in other embodiments, the first and second end caps 339, 341 may comprise integral components of the housing 331. Therefore, the housing 331 may form the valve chamber 332, the first piston chamber 338, and the second piston chamber 340. As shown, the first piston chamber 338 receives a pilot pressure from the first pilot port 234. The pilot pressure acts on the first side 334a of the first piston 334 to bias the piston 334, and thus, the spool 333 in a first direction, *i.e.,* to the right as shown in the figures. Conversely, the second piston chamber 340 receives a pilot pressure from the second pilot port 235. The pilot pressure acts on the first side 335a of the second piston 335 to bias the piston 335, and thus, the spool 333 in a second direction, *i.e.,* to the left as shown in the figures. As discussed above, the first and second pilot pressures are approximately equal to the pressures in the first and second chambers 205a, 205b of the fluid operated actuator 201.

Preferably, the adjustable valve 230 further comprises the bias port 236. As can be seen, the bias port 236 is in fluid communication with the first piston chamber 338; however, the pressure supplied to the bias port 236 acts on the second side 334b of the first piston 334, which is substantially opposite the first side 334a. Consequently, the pressure in the bias port 236 biases the first piston 334 and thus, the spool 333 in the second direction. Therefore, the pressure in the bias port 236 combines with the pressure supplied to the second pilot port 235. As a result, in order to actuate the adjustable valve 230 to the second position, the pressure received by the first pilot port 234 needs to be greater than the combined pressure supplied to the second pilot port 235 and the bias port 236 (assuming the cross-sectional areas of the pistons 334, 335 are equal). As can be appreciated, the pressure supplied to the bias port 236 can be adjusted by adjusting the setting of the pressure regulator 240 shown in FIG. 2. Adjusting the pressure supplied to the bias port 236 can therefore, adjust the differential pressure required between the first and second pilot ports 234, 235 to actuate the pilot valve 230 to the second position.

Also shown in FIG. 3 is a second bias port 336. In the embodiment shown in FIG. 3, the second bias port 336 is not operational because it is not in fluid communication with the second piston chamber 340. However, if it is desirable to bias the spool 333 to the right instead of the left, the second bias port 336 could be drilled all the way through as shown for the first bias port 236 and communicate with the second piston chamber 340.

Referring now to FIGS. 2 & 3, the operation of the system 200 along with the adjustable valve 230 will be described. While the discussion that follows refers to operation of a fluid actuated door, it should be appreciated that the fluid operated actuator 201 may comprise any other type of cylinder where a safety-reversing feature is desired. Therefore, the present invention should not be limited to the operation of a door.

In use, the control valve 210 can be actuated in order to extend and retract the fluid operated actuator 201. Starting with the door closed, the solenoid 217 can be energized to actuate the control valve to a second position. As shown, in the second position, the first port 211 is selectively brought into fluid communication with the third port 213 while the second port 212 is selectively brought into fluid communication with the first exhaust port 215. The exhaust port 215 may include a muffler or throttle 260 as shown in order to restrict the rate at which the fluid can exhaust, thereby controlling the speed at which the door opens.

With the control valve 210 actuated to the second position, pressurized fluid is provided to the fluid line 219, and thus the second fluid port 222 of the balance valve 220. With the balance valve 220 in its default position, via the spring bias member 226, the second port 222 is selectively in fluid communication with the fourth port 224. Therefore, the fluid line 219 is in fluid communication with the fluid line 229 to pressurize the second chamber 205b, thereby retracting the piston 203 and piston rod 204 to open the door. Simultaneously, the pressurized fluid is also provided to the second pilot port 235 via the fluid line 238 and the bias port 236 via the fluid lines 239, 241, and the pressure regulator 240. Pressurized fluid is also provided to the first pilot port 234 via the fluid line 237, which increases in pressure as the volume of the first fluid chamber 205a reduces. However, with the third port 223 in fluid communication with the first fluid port 221 of the balance valve 220, the pressure is allowed to exhaust and therefore, the differential pressure is kept below the threshold pressure required to actuate the adjustable valve 230 to the second position. Therefore, the adjustable valve 230 remains in the default position to exhaust the pilot port 227, which keeps the balance valve 220 in the first position.

Once a user or operator desires to close the door, the first solenoid 216 can be energized to actuate the control valve 210 back to the first position. With the control valve 210 actuated to the first position, the first fluid port 211 is selectively brought into fluid communication with the second port 212 while the third port 213 is selectively brought into fluid communication with the second exhaust port 214. Consequently, the first fluid line 218 is pressurized by the pressurized fluid supply 250 and the second fluid line 219 is exhausted. The pressurized fluid line 218 thereby pressurizes the fluid line 228 and the first fluid chamber 205a of the fluid operated actuator 201 because the balance valve 220 remains in the first position. Similarly, the second fluid chamber 205b is exhausted via the fluid line 229, the port 224, the port 222, the fluid line 219, the port 213, and the port 214. The exhaust port 214 may be coupled to a throttle or nozzle 261 to restrict the rate at which fluid is exhausted.

As can be appreciated, as the first fluid chamber 205a is pressurized, the fluid line 237 and the first pilot port 234 are also pressurized. However, with the volume of the second fluid chamber 205b reducing, pressurized fluid also leaves the second fluid chamber 205b and flows to the second pilot port 235 of the adjustable bias valve 230 via the fluid lines 229 and 238. Therefore, so long as the piston 203 and the piston rod 204 are permitted to extend and close the door, the pressure differential between the first and second chambers 205a and 205b remains relatively small and below the threshold difference required to actuate the adjustable valve 230 as determined by the pressure delivered to the bias port 236.

In the event that an object or person is caught within the closing door while pressurized fluid is being supplied to the first fluid chamber 205a, the piston 203 and the piston rod 204 will stop moving due to the presence of the object. When this occurs, the pressure will build in the first fluid chamber 205a while simultaneously exhausting from the second fluid chamber 205b. Consequently, a pressure differential will occur between the first and second fluid chambers 205a, 205b. This pressure differential is also experienced at the first and second pilot ports 234, 235 of the adjustable valve 230. As can be seen in FIG. 3, when the pressure differential at the first and second pilot ports 234, 235, and thus, the first and second piston chambers 338, 340 exceeds the threshold difference, the spool 333 will move to the right, thereby opening a fluid communication path between the first port 231 and the third port 233 and closing the fluid communication path between the first port 231 and the second port 232. This fluid communication also brings the fluid lines 242, 243 into fluid communication with one another. Therefore, the pressurized fluid in line 243 is provided to the pilot port 227 of the balance valve 220 to reach the threshold pilot pressure, which actuates the balance valve 220 to the second position.

Once the balance valve 220 is actuated to the second position, the first and second fluid ports 221, 222 are closed off. Simultaneously, the third fluid port 223 is selectively brought into fluid communication with the fourth fluid port 224. This in turn brings the first and second fluid chambers 205a, 205b in fluid communication with one another, thereby stopping movement of the piston 203 and the piston rod 204 as the pressure in the fluid chambers 205a, 205b attempts to equalize. If a person is caught in the door, the person can then manually push the door open, as pressurized fluid is no longer being supplied to the first fluid chamber 205a. As can be appreciated, as a user pushes the door open, the pressure in the first fluid chamber 205a will remain higher than the pressure in the first fluid chamber 205b due to the reduced volume of the first fluid chamber 205a and the increase in volume of the second fluid chamber 205a will decrease due to the increased volume. This increased pressure retains the adjustable valve 230 in the second position.

Once the object or person is removed from the doorway and the door stops opening, the pressure in the first and second fluid chambers 205a, 205b will equalize and the adjustable valve 230 will actuate back to its first position due to the pressure supplied to the bias port 235. With the adjustable valve 230 back to the first position, the balance valve 220 can also actuate back to the first position, and pressurized fluid is once again supplied to the first chamber 205a to close the door.

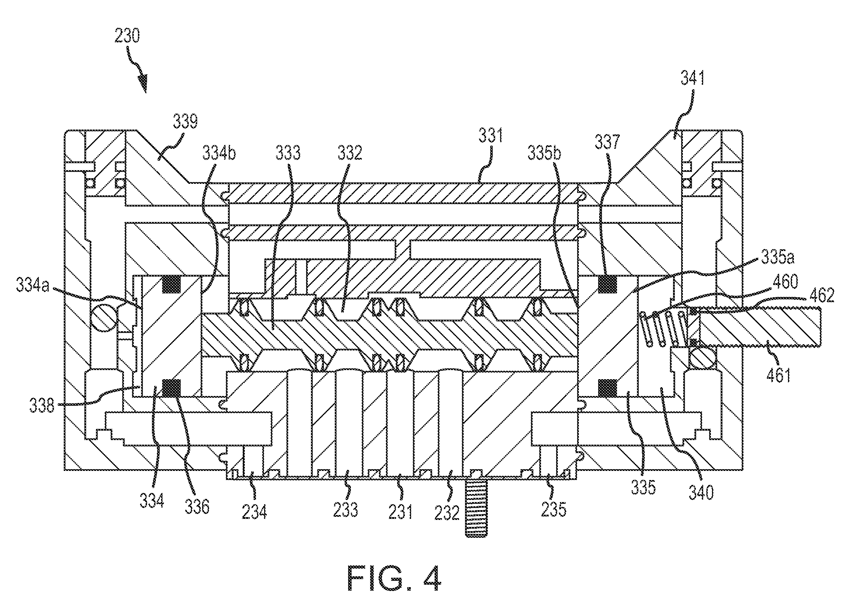

**FIG.** 4 shows a cross-sectional view of the adjustable valve 230 according to another embodiment. The adjustable valve 230 shown in FIG. 4 is similar to the pilot valve shown in FIG. 3 except, the adjustable valve 230 shown in FIG. 4 does not include the second sealing members on the pistons 334, 335. Further, the adjustable valve 230 shown in FIG. 4 does not include the bias ports 236, 336. Rather, the adjustable valve 200 according to the FIG. 4 includes an adjustable biasing spring 460. The biasing spring 460 can be provided to adjust the biasing force on the spool 333. The adjustable valve 230 may be desired if a separate fluid supply line, such as the fluid line 241 is not available or practical. As can be appreciated, the biasing force provided by the biasing spring 460 can be adjusted by moving the adjustment member 461 relative to the end cap 341. In the embodiment shown, the adjustment member 461 threadedly engages the end cap 341. As can be appreciated, the adjustment member 461 can be moved to the left in order to increase the compression of the spring 460, thereby increasing the biasing force provided on the spool 333. Conversely, the adjustment member 461 can be moved to the right in order to decrease the compression of the spring 460, thereby decreasing the biasing force provided on the spool 333. The adjustment member 461 further includes a sealing member 462 to maintain a fluid-tight seal with the end cap 341.

Operation of the adjustable valve 230 shown in FIG. 4 is similar to the operation as described above. However, rather than providing the biasing force using pressure supplied to the bias port 236, the biasing force on the spool 333 is provided by the adjustable spring 460. Further, because the spring 460 is adjustable, the biasing force can be adjusted to accommodate the desired differential pressure required to actuate the valve. As can be appreciated, if the adjustable valve 230 shown in FIG. 4 were incorporated into the schematic of FIG. 2, the pressure regulator 240 and the fluid line 241 could be omitted.

The present invention as described above provides an adjustable pilot-actuated valve. The valve can include a biasing force such that a differential pilot pressure is required to actuate the valve. The biasing force can be adjusted based on a supplied bias pressure or by adjusting compression of a biasing spring. Also taught by the present invention is that the adjustable pilot-actuated valve can be incorporated into a fluid operated actuator system as a safety feature, for example. Therefore, if a differential pressure is experienced in a fluid operated actuator, the differential pressure can be supplied as pilot pressures to the adjustable pilot-actuated valve in order to initiate a safety response.

The detailed descriptions of the above embodiments are not exhaustive descriptions of all embodiments contemplated by the inventors to be within the scope of the invention. Indeed, persons skilled in the art will recognize that certain elements of the above-described embodiments may variously be combined or eliminated to create further embodiments, and such further embodiments fall within the scope and teachings of the invention. It will also be apparent to those of ordinary skill in the art that the above-described embodiments may be combined in whole or in part to create additional embodiments within the scope and teachings of the invention.

Thus, although specific embodiments of, and examples for, the invention are described herein for illustrative purposes, various equivalent modifications are possible within the scope of the invention, as those skilled in the relevant art will recognize. The teachings provided herein can be applied to other fluid actuated systems, and not just to the embodiments described above and shown in the accompanying figures. Accordingly, the scope of the invention should be determined from the following claims.

## Claims

1. A fluid operated actuator system (200), comprising:
a fluid operated actuator (201) including a housing (202), a piston (203) movable within the housing (202) and separating the housing (202) into a first fluid chamber (205a) and a second fluid chamber (205b);
a control valve (210) including a first port (211) in fluid communication with a pressurized fluid source (250) and movable between a first position and a second position to selectively open a fluid communication path between the first port (211) and a second port (212) or the first port (211) and a third port (213);
**characterized by**:
a balance valve (220) in fluid communication with the first and second fluid chambers (205a, 205b) and movable between a first position and a second position including:
a first port (221) in fluid communication with the second port (212) of the control valve (210);
a second port (222) in fluid communication with the third port (213) of the control valve (210);
a pilot port (227) to receive a pilot pressure;
wherein if the pilot pressure is less than a threshold pressure, the balance valve (220) actuates to the first position to provide fluid communication between the control valve (210) and the fluid operated actuator (201);
wherein if the pilot pressure reaches a threshold pressure, the balance valve (220) actuates to the second position to provide fluid communication between the first and second fluid chambers (205a, 205b);
an adjustable pilot-actuated valve (230) movable between a first position and a second position including:
a first port (231) in fluid communication with the pilot port (227) of the balance valve (220);
a second port (232) comprising an exhaust;
a third port (233) in fluid communication with the pressurized fluid supply (250);
a first pilot port (234) in fluid communication with the first fluid chamber (205a);
a second pilot port (235) in fluid communication with the second fluid chamber (205b);
wherein the adjustable pilot-actuated valve (230) actuates to the first position to exhaust pressurized fluid acting on the pilot port (227) of the balance valve (220) if a pressure differential between the first fluid chamber (205a) and the second fluid chamber (205b) is less than a threshold difference; and
wherein the adjustable pilot-actuated valve (230) actuates to a second position to supply at least the threshold pilot pressure to the pilot port (227) to actuate the balance valve (220) to the second position if the pressure differential between the first fluid chamber (205a) and the second fluid chamber (205b) reaches the threshold difference.

2. The fluid operated actuator system (200) of claim 1, wherein the adjustable pilot actuated valve (230) further comprises a bias port (236) in fluid communication with a bias pressure.

3. The fluid operated actuator system (200) of claim 2, further comprising a pressure regulator (240) in fluid communication with the bias port (236) and the pressurized fluid supply (250) and adapted to receive pressurized fluid from the pressurized fluid supply (250) and output the bias pressure to the bias port (236).

4. The fluid operated actuator system (200) of claim 2, wherein the threshold difference is based on the bias pressure received by the bias port (236).

5. The fluid operated actuator system (200) of claim 1, wherein the adjustable pilot-actuated valve (230) further comprises:
a biasing spring (460) providing a biasing force to actuate the adjustable pilot-actuated valve (230) towards the first position; and
an adjustment member (461) contacting the biasing spring (460) to adjust the biasing force of the biasing spring (460).

6. The fluid operated actuator system (200) of claim 5, wherein the threshold difference is based on the biasing force provided by the biasing spring (460).

## Patentansprüche

1. Fluidbetätigtes Aktuatorsystem (200), das Folgendes umfasst:
einen fluidbetätigten Aktuator (201) mit einem Gehäuse (202), einem Kolben (203), der in dem Gehäuse (202) beweglich ist und das Gehäuse (202) in eine erste Fluidkammer (205a) und eine zweite Fluidkammer (205b) unterteilt;
ein Steuerventil (210) mit einem ersten Anschluss (211) in Fluidverbindung mit einer Druckfluidquelle (250), das zwischen einer ersten Position und einer zweiten Position beweglich ist, um einen Fluidverbindungspfad zwischen dem ersten Anschluss (211) und einem zweiten Anschluss (212) oder dem ersten Anschluss (211) und einem dritten Anschluss (213) selektiv zu öffnen;
**gekennzeichnet durch**:
ein Ausgleichsventil (220) in Fluidverbindung mit der ersten und zweiten Fluidkammer (205a, 205b), das zwischen einer ersten Position und einer zweiten Position beweglich ist und Folgendes aufweist:
einen ersten Anschluss (221) in Fluidverbindung mit dem zweiten Anschluss (212) des Steuerventils (210);
einen zweiten Anschluss (222) in Fluidverbindung mit dem dritten Anschluss (213) des Steuerventils (210);
einen Pilotanschluss (227) zum Aufnehmen eines Pilotdrucks;
wobei das Ausgleichsventil (220), wenn der Pilotdruck geringer ist als ein Schwellendruck, in die erste Position gestellt wird, um eine Fluidverbindung zwischen dem Steuerventil (210) und dem fluidbetätigten Aktuator (201) herzustellen;
wobei das Ausgleichsventil (220), wenn der Pilotdruck einen Schwellendruck erreicht, in die zweite Position gestellt wird, um eine Fluidverbindung zwischen der ersten und der zweiten Fluidkammer (205a, 205b) herzustellen;
ein justierbares pilotbetätigtes Ventil (230), das zwischen einer ersten Position und einer zweiten Position beweglich ist und Folgendes beinhaltet:
einen ersten Anschluss (231) in Fluidverbindung mit dem Pilotanschluss (227) des Ausgleichsventils (220);
einen zweiten Anschluss (232), der einen Auslass aufweist;
einen dritten Anschluss (233) in Fluidverbindung mit der Druckfluidversorgung (250);
einen ersten Pilotanschluss (234) in Fluidverbindung mit der ersten Fluidkammer (205a);
einen zweiten Pilotanschluss (235) in Fluidverbindung mit der zweiten Fluidkammer (205b);
wobei das justierbare pilotbetätigte Ventil (230) in die erste Position gestellt wird, um Druckfluid abzulassen, das auf den Pilotanschluss (227) des Ausgleichsventils (220) wirkt, wenn ein Druckdifferential zwischen der ersten Fluidkammer (205a) und der zweiten Fluidkammer (205b) geringer als eine Schwellendifferenz ist; und
wobei das justierbare pilotbetätigte Ventil (230) in eine zweite Position gestellt wird, um den Pilotanschluss (227) wenigstens mit dem Schwellenpilotdruck zu beaufschlagen, um das Ausgleichsventil (220) in die zweite Position zu stellen, wenn das Druckdifferential zwischen der ersten Fluidkammer (205a) und der zweiten Fluidkammer (205b) die Schwellendifferenz erreicht.

2. Fluidbetätigtes Aktuatorsystem (200) nach Anspruch 1, wobei das justierbare pilotbetätigte Ventil (230) ferner einen Vorspannungsanschluss (236) in Fluidverbindung mit einem Vorspanndruck umfasst.

3. Fluidbetätigtes Aktuatorsystem (200) nach Anspruch 2, das ferner einen Druckregler (240) in Fluidverbindung mit dem Vorspannungsanschluss (236) und der Druckfluidversorgung (250) umfasst und zum Aufnehmen von Druckfluid von der Druckfluidversorgung (250) und zum Beaufschlagen des Vorspannungsanschlusses (236) mit Vorspanndruck ausgelegt ist.

4. Fluidbetätigtes Aktuatorsystem (200) nach Anspruch 2, wobei die Schwellendifferenz auf dem vom Vorspannungsanschluss (236) erhaltenen Vorspanndruck basiert.

5. Fluidbetätigtes Aktuatorsystem (200) nach Anspruch 1, wobei das justierbare pilotbetätigte Ventil (230) ferner Folgendes umfasst:
eine Vorspannfeder (460), die eine Vorspannkraft erzeugt, um das justierbare pilotbetätigte Ventil (230) in die erste Position zu stellen; und
ein Justierelement (461), das mit der Vorspannfeder (460) in Kontakt kommt, um die Vorspannkraft der Vorspannfeder (460) zu justieren.

6. Fluidbetätigtes Aktuatorsystem (200) nach Anspruch 5, wobei die Schwellendifferenz auf der von der Vorspannfeder (460) bereitgestellten Vorspannkraft basiert.

## Revendications

1. Système d'actionneur opéré par fluide (200), comprenant :
un actionneur opéré par fluide (201) englobant un carter (202), un piston (203) apte à se déplacer à l'intérieur du carter (202) et séparant le carter (202) en une première chambre à fluide (205a) et une deuxième chambre à fluide (205b) ;
une vanne de commande (210) incluant un premier port (211) en communication fluidique avec une source de fluide pressurisé (250) et apte à se déplacer entre une première position et une deuxième position afin d'ouvrir sélectivement un trajet de communication fluidique entre le premier port (211) et un deuxième port (212) ou le premier port (211) et un troisième port (213) ;
**caractérisé par** :
une vanne d'équilibrage (220) en communication fluidique avec les première et deuxième chambres à fluide (205a, 205b) et apte à se déplacer entre une première position et une deuxième position incluant :
un premier port (221) en communication fluidique avec le deuxième port (212) de la vanne de commande (210) ;
un deuxième port (222) en communication fluidique avec le troisième port (213) de la vanne de commande (210) ;
un port pilote (227) pour recevoir une pression pilote ;
cas dans lequel, si la pression pilote est moins importante qu'une pression seuil, la vanne d'équilibrage (220) est actionnée pour se rendre à la première position afin d'assurer une communication fluidique entre la vanne de commande (210) et l'actionneur opéré par fluide (201) ;
cas dans lequel, si la pression pilote atteint une pression seuil, la vanne d'équilibrage (220) est actionnée pour se rendre à la deuxième position afin d'assurer une communication fluidique entre les première et deuxième chambres à fluide (205a, 205b) ;
une vanne réglable actionnée par pilote (230) apte à se déplacer entre une première position et une deuxième position incluant :
un premier port (231) en communication fluidique avec le port pilote (227) de la vanne d'équilibrage (220) ;
un deuxième port (232) comportant une évacuation ;
un troisième port (233) en communication fluidique avec l'alimentation en fluide pressurisé (250) ;
un premier port pilote (234) en communication fluidique avec la première chambre à fluide (205a) ;
un deuxième port pilote (235) en communication fluidique avec la deuxième chambre à fluide (205b) ;
cas dans lequel la vanne réglable actionnée par pilote (230) est actionnée pour se rendre à la première position pour évacuer du fluide pressurisé agissant sur le port pilote (227) de la vanne d'équilibrage (220) si un différentiel de pression entre la première chambre à fluide (205a) et la deuxième chambre à fluide (205b) est moins important qu'une différence seuil ; et
cas dans lequel la vanne réglable actionnée par pilote (230) est actionnée pour se rendre à une deuxième position afin de fournir au moins la pression pilote seuil au port pilote (227) afin d'actionner la vanne d'équilibrage (220) et l'amener à la deuxième position si le différentiel de pression entre la première chambre à fluide (205a) et la deuxième chambre à fluide (205b) atteint la différence seuil.

2. Système d'actionneur opéré par fluide (200) selon la revendication 1, la vanne réglable actionnée par pilote (230) comprenant en outre un port de sollicitation (236) en communication fluidique avec une pression de sollicitation.

3. Système d'actionneur opéré par fluide (200) selon la revendication 2, comprenant en outre un régulateur de pression (240) en communication fluidique avec le port de sollicitation (236) et l'alimentation en fluide pressurisé (250) et conçu pour recevoir du fluide pressurisé en provenance de l'alimentation en fluide pressurisé (250) et pour décharger la pression de sollicitation vers le port de sollicitation (236).

4. Système d'actionneur opéré par fluide (200) selon la revendication 2, la différence seuil étant fondée sur la pression de sollicitation reçue par le port de sollicitation (236).

5. Système d'actionneur opéré par fluide (200) selon la revendication 1, la vanne réglable actionnée par pilote (230) comprenant en outre :
un ressort de sollicitation (460) lequel fournit une force de sollicitation afin d'actionner la vanne réglable actionnée par pilote (230) pour l'amener vers la première position ; et
un élément de réglage (461) lequel se met au contact du ressort de sollicitation (460) afin de régler la force de sollicitation du ressort de sollicitation (460).

6. Système d'actionneur opéré par fluide (200) selon la revendication 5, la différence seuil étant fondée sur la force de sollicitation fournie par le ressort de sollicitation (460).
